# EUROPEAN PATENT APPLICATION

(11) **EP 4 057 673 A1**
(43) Date of publication of application: **14.09.2022**
(21) Application number: 21162372.3
(22) Date of filing: 12.03.2021
(51) Int. Cl.: H04W 24/04, H04L 12/24

(54) **METHOD FOR MAINTAINING A RADIO CELL OF A RAN**

(71) Applicant: Deutsche Telekom AG, 53113 Bonn (DE)
(72) Inventor: BÖHL, Martin, 90461 Nürnberg (DE); HEILAND, Thomas, 53225 Bonn (DE); HIPKE, Marc Christian, 53225 Bonn (DE)
(74) Representative: Raible Deissler Lehmann Patentanwälte PartG mbB

(57) **Abstract**

A method for maintaining a radio cell of a radio access network (RAN), comprising the steps: a radio cell of a radio access network and at least one further radio cell of the radio access network neighboring the radio cell are operated as a self-organizing network, the at least one neighboring radio cell being operated with at least one normal configuration parameter; the radio cell is deactivated and maintained during a predetermined maintenance time, and the at least one neighboring radio cell provides an area of the deactivated radio cell with a radio access during the maintenance time; a control unit of a self-organizing network within a radio access network, a radio access network and a computer program product for maintaining a radio cell of a radio access network.

## Description

The invention relates to a method for maintaining a radio cell of a radio access network (RAN), comprising the steps: a radio cell of a radio access network and at least one further radio cell of the radio access network neighboring the radio cell are operated as a self-organizing network (SON), the at least one neighboring radio cell being operated with at least one normal configuration parameter; the radio cell is deactivated and maintained during a predetermined maintenance time; and the at least one neighboring radio cell provides an area of the deactivated radio cell with a radio access during the maintenance time. The invention further relates to a control unit of a self-organizing network within a radio access network, a radio access network and a computer program product for maintaining a radio cell of a radio access network.

Methods for maintaining a radio access network, e.g. a mobile communication network, are known in the state of the art and inevitably have to be applied in order to ensure a proper function or extend a functionality of the radio access network.

The radio access network usually comprises a very plurality of radio cells. Each radio cell provides a terminal device arranged within an area of the radio cell, i.e. a range of an antenna defining and creating the radio cell. In other words, each radio cell allows the terminal device for a wireless connection with the radio access network. Of course, adjacent radio cells may and often will partially overlap each other.

Within the radio access network, there may be groups of radio cells being operated as so-called self-organizing networks. A self-organizing network comprises a plurality of radio cells and a control unit for automatically controlling the plurality of radio cells. The radio cells of a self-organizing network are usually located adjacent to each other and, thus, cover a larger area than the area of a single radio cell. The radio access network may comprise a plurality of self-organizing networks.

Maintaining the radio access network comprises maintaining every single radio cell. Due to the large number of radio cells there may easily be hundreds of maintenance requests a week to be scheduled and/or maintenance jobs to be accomplished by the operator of the radio access network, e.g. a mobile network operator (MNO). Apart from that, already scheduled maintenance jobs may be canceled rather short-term for unforeseeable reasons and, thus, have to be postponed. As a consequence, maintaining the radio access network is a very complex and comprehensive task to be organized and accomplished by the operator.

Maintaining a radio cell of the radio access network in many cases even requires a temporary complete deactivation of the radio cell during a maintenance time of the radio cell. As a consequence, a radio access in the area of the maintained radio cell is very limited during the maintenance time, i.e. a terminal device being arranged in an area, i.e. within a range of an antenna, of the maintained radio cell may be hindered from establishing a sufficient wireless connection to the radio access network or even at all prevented from establishing a wireless connection to the radio access network during the maintenance time.

Indeed, neighboring radio cells may be operated in a compensating mode in order to possibly compensate the deactivated radio cell and at least partially provide a radio access for terminal devices being arranged in the area of the maintained radio cell. On the one hand, determining the relevant and competent neighboring radio cells and, on the other hand, determining optimal compensating configuration parameters for the relevant and competent neighboring radio cells, however, has proven rather difficult and erroneous. Apart from that, switching the neighboring radio cells into the compensating mode may occur late as compared with a start of the maintenance time of the radio cell.

Thus, a functionality of the radio access network severely suffers during the maintenance time of the radio cell which causes an experience of a user of a terminal device being affected by the maintenance of the radio cell to be very poor.

It is therefore an object of the invention to suggest a method for maintaining a radio cell of a radio access network which substantially improves a user experience during a maintenance time of the radio cell. Further objects of the invention are a control unit for a self-organizing network within a radio access network, a radio access network and a computer program product for maintaining a radio cell of a radio access network.

One aspect of the invention is a method for maintaining a radio cell of a radio access network (RAN), comprising the steps: a radio cell of a radio access network and at least one further radio cell of the radio access network neighboring the radio cell are operated as a self-organizing network (SON), the at least one neighboring radio cell being operated with at least one normal configuration parameter; the radio cell is deactivated and maintained during a predetermined maintenance time; and the at least one neighboring radio cell provides an area of the deactivated radio cell with a radio access during the maintenance time. The maintenance method requires a self-organizing network comprising a control unit for controlling the radio cells of the self-organizing network. The control unit allows for causing the neighboring cells to compensate the deactivated radio cell.

The radio access network may be a mobile telecommunication network. As mobile telecommunication networks usually comprise a plurality of self-organizing networks, i.e. groups of radio cells and respective associated control units, there are many use cases for the invention.

According to the invention, a control unit of the self-organizing network determines the at least one neighboring radio cell and at least one compensating configuration parameter of the at least one determined neighboring radio cell and automatically applies the at least one determined compensating configuration parameter to the at least one neighboring radio cell when the maintenance time starts and automatically restores the at least one normal configuration parameter when the maintenance time stops. The control unit releases the operator of the radio access network from manually determining the at least one neighboring radio cell and the at least one compensating configuration parameter.

Furthermore, the automatic application of the compensating configuration parameter and the automatic restoration of the normal configuration parameter reduce a time of an unnecessarily limited radio access due to the maintenance to a minimum. In other words, while there might still be a limited radio access during the maintenance time despite a compensation accomplished by the at least neighboring radio cell, a time is minimized when the limitation is worse than absolutely necessary.

In a preferred embodiment a ticket system of an operator of the radio access network causes the control unit of the self-organizing network to apply the at least one compensating configuration parameter when the maintenance time starts and/or to restore the at least one normal configuration parameter when a maintenance ticket is closed by the operator. The operator may be a mobile network operator (MNO). The operator uses to apply a ticket system for centrally administrating the maintenance of the radio access network. The ticket system may control the control unit of the self-organizing network via an application programming interface (API).

The operator may manually deactivate the radio cell when the maintenance time starts and/or manually reactivate the deactivated radio cell when the maintenance time stops. Thus, the operator maintains control over the radio cell to be maintained while the control over the at least one neighboring radio cell is delegated to the control unit of the self-organizing network.

Preferably, a criticality tool of the operator provides the control unit with job data concerning a plurality of critical maintenance jobs to be carried out during a predetermined time period. The criticality tool allows for an objective selection of the radio cell requiring a compensation accomplished by the at least one neighboring radio cell and releases the operator from making the selection. On the other hand, the criticality tool also allows for avoiding any unnecessary compensation. A noncritical radio cell to be maintained is not selected, and a corresponding maintenance job is dismissed. An avoidance of the compensating operation of the at least one neighboring radio cell is always advantageous as any compensating operation may impede terminal devices being arranged within the at least one neighboring radio cell. The predetermined time period may be, e.g., a week or a month. The criticality tool may control the control unit of the self-organizing network via an application programming interface (API).

A trace system of the operator advantageously provides the control unit with tracing data of the self-organizing network. The tracing data allows the control unit for determining the at least one neighboring radio cell on an objective basis which is automatically achieved by the trace system. The trace system communicates with the control unit via an application programming interface (API).

In some embodiments the control unit determines the at least one neighboring radio cell and the at least one compensating parameter of the at least one neighboring radio cell depending on the provided job data and/or tracing data. The job data and/or the tracing data are provided before the predetermined time period enables the control unit to schedule and adequately prepare each maintenance job to be accomplished during the predetermined time period.

The criticality tool may collect a plurality of maintenance requests and determine the plurality of critical maintenance jobs before the predetermined time period. The criticality tool filters the collected maintenance requests with respect of the criticality thereof. In other words, the criticality tool automatically tells apart maintenance jobs requiring a compensation during the maintenance time from maintenance jobs which may be accomplished without a compensation. The criticality tool allows for accurately justifying any compensating measure of the control unit of the self-organizing network and, at the same time, effectively avoiding a superfluous compensating action of the control unit.

Determining the plurality of critical maintenance jobs preferably comprises calculating a criticality score for each collected maintenance request and selecting each maintenance request with a criticality score above a criticality threshold to be a critical maintenance job while dismissing each maintenance request with a criticality score below the criticality threshold. The criticality score is the key criterion for distinguishing maintenance jobs requiring a compensation during the maintenance time from maintenance jobs doing without a compensation. The criticality depends on a plurality of values associated with the radio cell to be maintained.

In these embodiments calculating the criticality score may comprise, for each of a plurality of actual values associated with the radio cell, calculating a fulfillment percentage as compared with a corresponding predetermined target value, multiplying the fulfillment percentage with a predetermined weight value and summing up the multiplied fulfillment percentages, the sum yielding the criticality score. The way of calculating the criticality score defines a criticality function which depends on the predetermined target values, corresponding actual values and corresponding weight values. Each value represents a characteristic feature of the radio cell relevant for the compensation requirement. The predetermined target values are chosen as general benchmark values being independent of a particular radio cell. The actual values are associated, either as a technical feature value or as a measured value, with the radio cell to be maintained.

Comparing each actual value with a corresponding target value yields a fulfillment percentage, i.e. a degree the radio cell to be maintained matches the benchmark radio cell. A percentage of 100% indicates a perfect match. A percentage of less than 100% indicates an under-fulfillment while a percentage of more than 100% indicates an over-fulfillment. Each target value may additionally be accomponied by either an upper threshold value or a lower threshold value. When a single actual value exceeds the upper threshold value of the corresponding targe value the maintenance job may be considered to be critical without even taking into account other actual values. When a single actual value falls below the lower threshold value of the corresponding target value the maintenance job may be considered to be critical without even taking into account other actual values.

The weight values allow for applying a relevance order to the values, i.e. distinguishing highly relevant values from rather irrelevant values. Thus, the criticality value is easily calculated and intelligently summarizes a compensation requirement of the radio cell to be maintained.

Examples for the characteristic features are a number of neighboring radio cells, a status as a campus radio cell, a length of the expected maintenance time, a degree of impact on the radio access during the maintenance time, a number of terminal devices using the radio cell, a supported telecommunication standard, an overlap percentage with neighboring radio cells, a presence of special infrastructure within the radio cell, e.g. a tunnel, a freeway, a railroad, a presence of relevant customers within the radio cell, a VIP status, an amount of voice traffic, an amount of data traffic, an economic revenue, a directional radio of the radio cell to name only a few.

In many embodiments the at least one neighboring radio cell is operated with a plurality of normal configuration parameters and/or the control unit determines a plurality of compensating configuration parameters. When an operation mode of a radio cell as usually depends on a plurality of configuration parameters, a plurality of compensating configuration parameters has to be determined. Accordingly, a plurality of normal configuration parameters has to be restored after the maintenance time.

In other embodiments providing the area of the deactivated radio cell with the radio access comprises operating the neighboring radio cell with an increased transmission power and/or with an adapted tilt. A range of radio waves may be increased by increasing the transmission power of the antenna of the neighboring radio cell or by adjusting a transmission angle of the radio waves, i.e. a tilt of the antenna.

In favorable embodiments a plurality of neighboring radio cells is determined for together providing the area of the deactivated radio cell with the radio access. The more neighboring radio cells compensate the radio cell during maintenance the less the radio access in the area of the maintained radio cell is limited.

Another aspect of the invention is a control unit of a self-organizing network within a radio access network control unit of a self-organizing network within a radio access network. The control unit is configured for controlling radio cells comprised by the self-organizing network. As radio access networks usually comprise a plurality of self-organizing networks the inventive control unit is widely applicable.

According to the invention the control unit is configured for determining at least one neighboring radio cell of a radio cell to be maintained, the radio cells being operated as a self-organizing network, for determining at least one compensating configuration parameter of the at least one determined neighboring radio cell and for applying the at least one determined compensating configuration parameter to the determined at least one neighboring radio cell when a maintenance time of the radio cell starts and automatically restoring the at least one normal configuration parameter of the determined neighboring radio cell when the maintenance time of the radio cell stops. In other words, the control unit is configured for automatically and completely autonomously optimizing the compensating effect of the neighboring radio cells during the maintenance time of the radio cell. Thus, an operator of the radio access network is released from any manual compensating measure while a limitation of the radio access within the maintained radio cell is reduced as far as possible.

Particularly, the control unit is configured for participating in a method according to the invention. The control unit allows for carrying out the inventive method within a radio access network and an infrastructure or a maintenance process of an operator of the radio access network.

Still another aspect of the invention is a radio access network, wherein the radio access network comprises a self-organizing network. The radio access network may comprise a plurality of self-organizing networks. Given a plurality of such radio access networks, there are many applications for the inventive radio access network.

According to the invention the radio access network comprises a control unit of the self-organizing network according to the invention. The radio access network allows an operator of the radio access network for limiting a negative impact on a radio access due to a maintenance of a radio cell providing the radio access as far as possible.

A fourth aspect of the invention is a computer program product for maintaining a radio cell of a radio access network, the computer program product comprising a storage medium with a program code for a computer. The storage medium may comprise a CD, a DVD, a USB stick, a memory chip, a hard disk or a cloud space to name only a few.

According to the invention the program code causes the computer to operate as a control unit of a self-organizing network according to the invention within the radio access network when being executed by a processor of the computer. The computer program product allows for enabling an existing control unit of a self-organizing network within a radio access network to participate in the inventive method which is economically favorable.

Alternatively, but still according to the invention, the program code may cause the computer to operate as a criticality tool when being executed by a processor of the computer. The computer program product allows enabling an existing computer to participate in the inventive method as the criticality tool which is economically favorable.

It is an essential advantage of the method according to the invention that a user experience during a maintenance time of the radio cell is substantially improved. Apart from that, the method may be easily integrated into an existing infrastructure of an operator. Due to standardized APIs the method may be widely applied in radio access networks comprising self-organizing networks. The method allows for planning a maintenance of a radio cell in advance and automatically compensating a negative impact of the maintenance.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of two exemplary embodiments and with reference to the drawings. Like components are indicated by like reference numerals throughout the drawings.

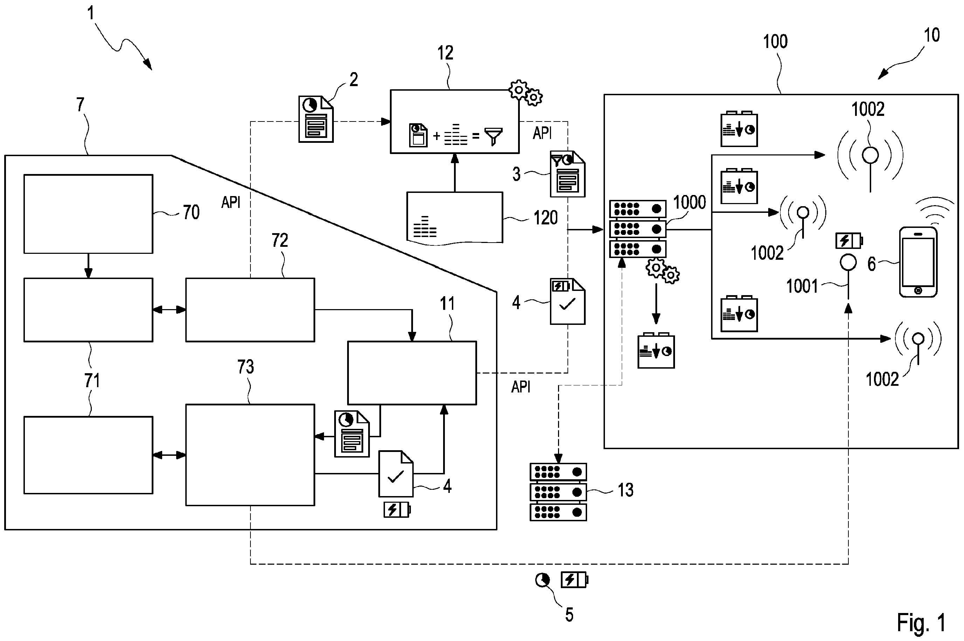

- Fig. 1: schematically shows a block diagram of a system comprising a radio access network according to an embodiment of the invention.

Fig. 1 shows schematically shows a block diagram of a system 1 comprising a radio access network (RAN) 10 according to an embodiment of the invention.

The radio access network 10 comprises a self-organizing network (SON) 100 with a plurality of radio cells 1001, 1002 and a control unit 1000 for controlling the radio cells 1001, 1002. Each radio cell 1001, 1002 comprises an antenna and is configured for providing a radio access for a terminal device 6 when the terminal device 6 is within in a range of the respective antenna. As described in greater detail below, the radio cell 1001 is going to be maintained. The further radio cells 1002 keep being operated while the radio cell 1001 is maintained. The further radio cells 1002 are radio cells neighboring the radio cell 1001, i.e. areas of the neighboring radio cells 1002 are arranged adjacent to the radio cell 1001 to be maintained.

The control unit 1000 of the self-organizing network 100 is configured for determining at least one neighboring radio cell 1002, particularly a plurality of neighboring radio cells 1002, of the radio cell 1001 to be maintained, and at least one compensating configuration parameter of the at least one determined neighboring radio cell 1002, particularly at least one compensating configuration parameter for each of the plurality of neighboring radio cells 1002.

The control unit 1000 is further configured for applying the at least one determined compensating configuration parameter to the determined at least one neighboring radio cell 1002 when a maintenance time of the radio cell 1001 starts and for automatically restoring at least one normal configuration parameter of the determined neighboring radio cell 1002 when the maintenance time of the radio cell 1001 stops.

The control unit 1000 may be set up by means of a computer program product for maintaining the radio cell 1001 of the radio access network 10. The computer program product comprises a storage medium with a program code for a computer. The program code causes the computer to operate as the control unit 1000 of the self-organizing network 100 within the radio access network 10 when being executed by a processor of the computer. The set-up control unit 1000 is preferably configured for participating in a method for maintaining the radio cell 1001 as described below. Particularly, the radio access network 10 is configured to be a mobile telecommunication network, the terminal device is configured to be a user equipment (UE), e.g. a smartphone, a tablet, a notebook or the like, configured for establishing a wireless connection to an antenna of a radio cell 1001, 1002 of the mobile telecommunication network and the operator 7 is represented by a mobile network operator (MNO).

The system 1 may further comprise a criticality tool 12 implementing a score function 120, a trace system 13 and a ticket system 11 of an operator 7 operating the radio access network 10 and organizing a maintenance of the radio cell 1001. The criticality tool 12 may be comprised by the operator 7 as well. The ticket system 11, the criticality tool 12, the trace system 13 and the control unit 1000 of the self-organizing network 100 are functionally connected to each other by respective application programming interfaces (API).

Of course, the operator 7 may as usually comprise a plurality of divisions being involved in operating the radio access network 10, e.g. a planning division 70, an antenna installer 71 which may be out-sourced by the operator 7, a change division 72 and an operating division 73 controlling the radio access network 10. The ticket system 11 may be operated by the change division 72 and the operating division 73.

The radio cell 1001 of the radio access network 10 is maintained by carrying out a method comprising the following steps.

The radio cell 1001 of the radio access network 10 and at least one further radio cell 1002, particularly each further radio cell 1002, of the radio access network 10 are operated as a self-organizing network 100. The at least one neighboring radio cell 1002 is operated with at least one normal configuration parameter.

The criticality tool 12 may collect a plurality of maintenance requests 2 which may originate from the change division 72 of the operator 7 and determines a plurality of critical maintenance jobs 3 before a predetermined time period, e.g. a week or a month. Determining the plurality of critical maintenance jobs 3 preferably comprises calculating a criticality score for each collected maintenance request 2 and selecting each maintenance request 2 with a criticality score above a criticality threshold to be a critical maintenance job 3 while dismissing each maintenance request 2 with a criticality score below the criticality threshold.

Calculating the criticality score may comprise, for each of a plurality of actual values associated with the radio cell 1001, calculating a fulfillment percentage as compared with a corresponding predetermined target value, multiplying the fulfillment percentage with a predetermined weight value and summing up the multiplied fulfillment percentages, the sum yielding the criticality score. The score function 120 implemented by the criticality tool 12 predetermines the target values and the weight values and the indicated order of calculation steps.

The criticality tool 12 provides the control unit 1000 with job data concerning a plurality of critical maintenance jobs 3 to be carried out during the predetermined time period. The trace system 13 of the operator 7 provides the control unit 1000 with tracing data of the self-organizing network 100.

The control unit 1000 determines the at least one neighboring radio cell 1002 and the at least one compensating parameter of the at least one determined neighboring radio cell 1002, preferably depending on the provided job data and/or tracing data.

The ticket system 11 of the operator 7 of the radio access network 10 may cause the control unit 1000 of the self-organizing network 100 to apply the at least one compensating configuration parameter when the maintenance time of the radio cell 1001 starts and, respectively, to restore the at least one normal configuration parameter when a maintenance ticket 4 is closed by the operator 7, particularly by the operating division 73 of the operator 7.

In another step, the control unit 1000 applies the at least one determined compensating configuration parameter to the determined at least one neighboring radio cell 1002 when the maintenance time of the radio cell 1001 starts and automatically restores the at least one normal configuration parameter of the determined neighboring radio cell 1002 when the maintenance time of the radio cell 1001 stops.

The radio cell 1001 is deactivated and maintained during the predetermined maintenance time. The operator 7, particularly the operating division 73, may manually deactivate the radio cell 1001 when the maintenance time starts and, respectively, manually reactivate the deactivated radio cell 1001 when the maintenance time stops. For deactivating or reactivating the radio cell 1001 the operator 7, particularly the operating division 73, may transmit a deactivation signal 5 or a reactivation signal 5 to the radio cell 1001, respectively.

Thus, the at least one neighboring radio cell 1002 provides an area of the deactivated radio cell 1001 with a radio access during the maintenance time. Preferably, a plurality of neighboring radio cells 1002 is determined by the control unit 1000 for together providing the area of the deactivated radio cell 1001 with the radio access.

Providing the area of the deactivated radio cell 1001 with the radio access may comprise operating the neighboring radio cell 1002 with an increased transmission power and/or with an adapted tilt corresponding to and as specified by the at least one compensating configuration parameter.

Of course, the at least one neighboring radio cell 1002 is generally operated with a plurality of normal configuration parameters and/or the control unit 1000 determines a plurality of compensating configuration parameters for the at least one neighboring radio cell 1002.

### Reference Numerals

- 1: system
- 10: radio access network
- 100: self-organizing network
- 1000: control unit
- 1001: radio cell
- 1002: neighboring radio cell
- 11: ticket system
- 12: criticality tool
- 120: score function
- 13: trace system
- 2: maintenance request
- 3: critical maintenance job
- 4: maintenance ticket
- 5: deactivation/reactivation command
- 6: mobile device
- 7: operator
- 70: planning division
- 71: antenna installer
- 72: change division
- 73: operating division

## Claims

1. A method for maintaining a radio cell (1001) of a radio access network (10), comprising the steps:
- a radio cell (1001) of a radio access network (10) and at least one further radio cell (1002) of the radio access network (10) neighboring the radio cell (1001) are operated as a self-organizing network (100), the at least one neighboring radio cell (1002) being operated with at least one normal configuration parameter;
- the radio cell (1001) is deactivated and maintained during a predetermined maintenance time;
- the at least one neighboring radio cell (1002) provides an area of the deactivated radio cell (1001) with a radio access during the maintenance time;
- a control unit (1000) of the self-organizing network (100) determines the at least one neighboring radio cell (1001) and at least one compensating configuration parameter of the at least one determined neighboring radio cell (1002);
- the control unit (1000) applies the at least one determined compensating configuration parameter to the determined at least one neighboring radio cell (1002) when the maintenance time starts and automatically restores the at least one normal configuration parameter of the determined neighboring radio cell (1002) when the maintenance time stops.

2. The method according to claim 1, wherein a ticket system (11) of an operator (7) of the radio access network (10) causes the control unit (1000) of the self-organizing network (100) to apply the at least one compensating configuration parameter when the maintenance time starts and/or to restore the at least one normal configuration parameter when a maintenance ticket (4) is closed by the operator (7).

3. The method according to claim 1 or 2, wherein the operator (7) manually deactivates the radio cell (1001) when the maintenance time starts and/or manually reactivates the deactivated radio cell (1001) when the maintenance time stops.

4. The method according to one of claims 1 to 3, wherein a criticality tool (12) of the operator (7) provides the control unit (1000) with job data concerning a plurality of critical maintenance jobs (3) to be carried out during a predetermined time period.

5. The method according to one of claims 1 to 4, wherein a trace system (13) of the operator (7) provides the control unit (1000) with tracing data of the self-organizing network (100).

6. The method according to claim 4 or 5, wherein the control unit (1000) determines the at least one neighboring radio cell (1002) and the at least one compensating parameter of the at least one neighboring radio cell (1002) depending on the provided job data and/or tracing data.

7. The method according to claim 6, wherein the criticality tool (12) collects a plurality of maintenance requests (2) and determines the plurality of critical maintenance jobs (3) before the predetermined time period.

8. The method according to claim 7, wherein determining the plurality of critical maintenance jobs (3) comprises calculating a criticality score for each collected maintenance request (2) and selecting each maintenance request (2) with a criticality score above a criticality threshold to be a critical maintenance job (3) while dismissing each maintenance request (2) with a criticality score below the criticality threshold.

9. The method according to claim 8, wherein calculating the criticality score comprises, for each of a plurality of actual values associated with the radio cell (1001), calculating a fulfillment percentage as compared with a corresponding predetermined target value, multiplying the fulfillment percentage with a predetermined weight value and summing up the multiplied fulfillment percentages, the sum yielding the criticality score.

10. The method according to one of claims 1 to 7, wherein the at least one neighboring radio cell (1002) is operated with a plurality of normal configuration parameters and/or the control unit (1000) determines a plurality of compensating configuration parameters.

11. The method according to one of claims 1 to 10, wherein providing the area of the deactivated radio cell (1001) with the radio access comprises operating the neighboring radio cell (1002) with an increased transmission power and/or with an adapted tilt.

12. The method according to one of claims 1 to 11, wherein a plurality of neighboring radio cells (1002) is determined for together providing the area of the deactivated radio cell (1001) with the radio access.

13. A control unit (1000) of a self-organizing network (100) within a radio access network (10), wherein the control unit (1000) is configured for
- determining at least one neighboring radio cell (1002) of a radio cell (1001) to be maintained, the radio cells (1001, 1002) being operated as a self-organizing network (100), and at least one compensating configuration parameter of the at least one neighboring radio cell (1002),
- applying the at least one determined compensating configuration parameter to the determined at least one neighboring radio cell (1002) when a maintenance time of the radio cell (1001) starts and automatically restoring the at least one normal configuration parameter of the determined neighboring radio cell (1002) when the maintenance time of the radio cell (1001) stops.

14. A radio access network, wherein the radio access network (100) comprises a self-organizing network (100) and a control unit (1000) of the self-organizing network (100) according to claim 13.

15. A computer program product for maintaining a radio cell (1001) of a radio access network (10), comprising a storage medium with a program code for a computer, the program code causing the computer to operate as a control unit (1000) of a self-organizing network (100) according to claim 13 within the radio access network (10) when being executed by a processor of the computer.

## Amended claims

### Amended claims in accordance with Rule 137(2) EPC.

1. A method for maintaining a radio cell (1001) of a radio access network (10), wherein
- a radio cell (1001) of a radio access network (10) and at least one further radio cell (1002) of the radio access network (10) neighboring the radio cell (1001) are operated as a self-organizing network (100), the at least one neighboring radio cell (1002) being operated with at least one normal configuration parameter;
- the radio cell (1001) is deactivated and maintained during a predetermined maintenance time;
- the at least one neighboring radio cell (1002) provides an area of the deactivated radio cell (1001) with a radio access during the maintenance time;
- a criticality tool (12) of an operator (7) of the radio access network (10) provides a control unit (1000) of the self-organizing network (100) with job data concerning a plurality of critical maintenance jobs (3) to be carried out during a predetermined time period;
- the control unit (1000) determines the at least one neighboring radio cell (1001) and at least one compensating configuration parameter of the at least one determined neighboring radio cell (1002) depending on the provided job data;
- the control unit (1000) applies the at least one determined compensating configuration parameter to the determined at least one neighboring radio cell (1002) when the maintenance time starts and automatically restores the at least one normal configuration parameter of the determined neighboring radio cell (1002) when the maintenance time stops.

2. The method according to claim 1, wherein a ticket system (11) of the operator (7) causes the control unit (1000) of the self-organizing network (100) to apply the and least one compensating configuration parameter when the maintenance time starts and/or to restore the at least one normal configuration parameter when a maintenance ticket (4) is closed by the operator (7).

3. The method according to claim 1 or 2, wherein the operator (7) manually deactivates the radio cell (1001) when the maintenance time starts and/or manually reactivates the deactivated radio cell (1001) when the maintenance time stops.

4. The method according to one of claims 1 to 3, wherein a trace system (13) of the operator (7) provides the control unit (1000) with tracing data of the self-organizing network (100).

5. The method according to claim 4, wherein the control unit (1000) determines the at least one neighboring radio cell (1002) and the at least one compensating parameter of the at least one neighboring radio cell (1002) depending on the provided tracing data.

6. The method according to claim 5, wherein the criticality tool (12) collects a plurality of maintenance requests (2) and determines the plurality of critical maintenance jobs (3) before the predetermined time period.

7. The method according to claim 6, wherein determining the plurality of critical maintenance jobs (3) comprises calculating a criticality score for each collected maintenance request (2) and selecting each maintenance request (2) with a criticality score above a criticality threshold to be a critical maintenance job (3) while dismissing each maintenance request (2) with a criticality score below the criticality threshold.

8. The method according to claim 7, wherein calculating the criticality score comprises, for each of a plurality of actual values associated with the radio cell (1001), calculating a fulfillment percentage as compared with a corresponding predetermined target value, multiplying the fulfillment percentage with a predetermined weight value and summing up the multiplied fulfillment percentages, the sum yielding the criticality score.

9. The method according to one of claims 1 to 8, wherein the at least one neighboring radio cell (1002) is operated with a plurality of normal configuration parameters and/or the control unit (1000) determines a plurality of compensating configuration parameters.

10. The method according to one of claims 1 to 9, wherein providing the area of the deactivated radio cell (1001) with the radio access comprises operating the neighboring radio cell (1002) with an increased transmission power and/or with an adapted tilt.

11. The method according to one of claims 1 to 10, wherein a plurality of neighboring radio cells (1002) is determined for together providing the area of the deactivated radio cell (1001) with the radio access.

12. A control unit (1000) of a self-organizing network (100) within a radio access network (10), wherein the control unit (1000) is configured for
- receiving job data concerning a plurality of critical maintenance jobs (3) to be carried out during a predetermined time period, the job data being provided by a criticality tool (12) of an operator (7) of the radio access network (10);
- determining at least one neighboring radio cell (1002) of a radio cell (1001) to be maintained, the radio cells (1001, 1002) being operated as a self-organizing network (100), and at least one compensating configuration parameter of the at least one neighboring radio cell (1002) depending on the job data,
- applying the at least one determined compensating configuration parameter to the determined at least one neighboring radio cell (1002) when a maintenance time of the radio cell (1001) starts and automatically restoring the at least one normal configuration parameter of the determined neighboring radio cell (1002) when the maintenance time of the radio cell (1001) stops.

13. A radio access network, wherein the radio access network (100) comprises a self-organizing network (100) and a control unit (1000) of the self-organizing network (100) according to claim 12.

14. A computer program product for maintaining a radio cell (1001) of a radio access network (10), comprising a storage medium with a program code for a computer, the program code causing the computer to operate as a control unit (1000) of a self-organizing network (100) according to claim 12 within the radio access network (10) when being executed by a processor of the computer.
